# EUROPEAN PATENT APPLICATION

(11) **EP 3 835 658 A1**
(43) Date of publication of application: **16.06.2021**
(21) Application number: 20209650.9
(22) Date of filing: 24.11.2020
(51) Int. Cl.: F23R 3/00, F02C 7/264

(54) **COMBUSTOR IGNITION TIMING**

(30) Priority: 10.12.2019 US 201916708526
(71) Applicant: General Electric Company, Schenectady, NY 12345 (US)
(72) Inventor: FULLER, Jason Dean, Greenville, SC South Carolina 29615 (US); DICINTIO, Richard Martin, Greenville, SC South Carolina 29615 (US); YORK, William David, Greenville, SC South Carolina 29615 (US)
(74) Representative: Openshaw & Co.

(57) **Abstract**

Turbomachines (10) and methods of operating turbomachines (10) are provided. The turbomachine (10) may include a compressor (14), a turbine (18), a plurality of combustors (16) downstream from the compressor (14) and upstream from the turbine (18). The turbomachine (10) may also include a plurality of igniters (17). Methods of operating a turbomachine (10) may include rotating a shaft (22) of the turbomachine (10) at a first speed and rotating the shaft (22) of the turbomachine (10) at a second speed different from the first speed after rotating the shaft (22) of the turbomachine (10) at the first speed. The methods may also include firing at least one igniter (17) of the plurality of igniters (17) repeatedly throughout the period of time at a regular interval and/or when the rotational speed reaches at least one predetermined speed threshold during the period of time.

## Description

### FIELD

The present disclosure relates generally to methods and apparatus for igniting combustors of a turbomachine.

### BACKGROUND

Gas turbines, aircraft engines, and numerous other combustion-based systems include one or more combustors that mix a working fluid (such as air) with fuel and ignite the fuel-air mixture to produce high temperature and pressure combustion gases. For example, commercial gas turbines may be used for generating power. A typical gas turbine used to generate electrical power includes, in serial flow order, a compressor, a combustion section, and a turbine. Ambient air may be supplied to the compressor, and rotating blades and stationary vanes in the compressor progressively impart kinetic energy to the working fluid (air) to produce a compressed working fluid at a highly energized state. The compressed working fluid exits the compressor and flows into each of a plurality of combustors in the combustion section, where the compressed working fluid mixes with fuel in one or more fuel nozzles. The fuel-air mixture flows into a combustion chamber in each combustor where the mixture is ignited to generate combustion gases having a high temperature and a high pressure. The combustion gases expand in the turbine to produce work. For example, expansion of the combustion gases in the turbine may rotate a shaft connected to a generator to produce electricity.

The combustion is typically initiated by an ignition system in one or more, but less than all, of the combustors. The ignition system may produce a spark or other source of ignition, e.g., a laser beam or pilot flame, inside of the one or more combustors. In some gas turbines, the plurality of combustors is generally linked or interconnected through cross-fire tubes between each pair of adjacent combustors. Combustion initiated in one combustor, e.g., the combustor having the ignition system, may propagate throughout all of the combustors through the cross-fire tubes.

The cross-fire tubes extend through a side of each combustion chamber so that combustion gases may travel from one combustor to the combustion chamber of the next adjacent combustor. This design also requires a penetration through the liner of the combustor for each cross-fire tube, creating a potential source of leakage and/or turbulent flow through or around the penetration. In addition, cross-fire tubes extending between the sides of the adjacent combustors necessarily interfere with the flow of the working fluid between the liner and the flow sleeve of each combustor. These obstructions cause low velocity areas on the back side of the liner, which, in turn, create hot spots and liner distress. Such configurations also have complex thermal transients from can to can that cause the cross-fire tubes to bind up or become dislodged from their intended positions, leading to outages to correct the hardware and to permit proper startup.

### BRIEF DESCRIPTION

Aspects and advantages of the systems and methods in accordance with the present disclosure will be set forth in part in the following description, or may be obvious from the description, or may be learned through practice of the technology.

In accordance with one embodiment, a method of operating a turbomachine is provided. The turbomachine includes a compressor, a turbine, and a plurality of combustors downstream from the compressor and upstream from the turbine. The turbomachine also includes a plurality of igniters. Each igniter in the plurality of igniters is mounted on and in operative communication with a corresponding one of the plurality of combustors, and each combustor of the plurality of combustors has a corresponding igniter mounted thereon. The method includes rotating a shaft of the turbomachine at a first speed and rotating the shaft of the turbomachine at a second speed different from the first speed after rotating the shaft of the turbomachine at the first speed. The rotational speed of the shaft changes from the first speed to the second speed over a period of time. The method further includes firing at least one igniter of the plurality of igniters repeatedly throughout the period of time at a regular interval.

In accordance with another embodiment, a method of operating a turbomachine is provided. The turbomachine includes a plurality of combustors and a plurality of igniters. Each igniter in the plurality of igniters is mounted on and in operative communication with a corresponding one of the plurality of combustors, and each combustor of the plurality of combustors has a corresponding igniter mounted thereon. The method includes rotating a shaft of the turbomachine at a first speed and rotating the shaft of the turbomachine at a second speed different from the first speed after rotating the shaft of the turbomachine at the first speed. The rotational speed of the shaft changes from the first speed to the second speed over a period of time. The method further includes firing at least one igniter of the plurality of igniters when the rotational speed reaches at least one predetermined speed threshold during the period of time.

In accordance with still another embodiment, a turbomachine is provided. The turbomachine includes a compressor, a turbine, and a plurality of combustors downstream from the compressor and upstream from the turbine. The turbomachine also includes a plurality of igniters. Each igniter in the plurality of igniters is mounted on and in operative communication with a corresponding one of the plurality of combustors, and each combustor of the plurality of combustors has a corresponding igniter mounted thereon.

These and other features, aspects and advantages of the present systems and methods will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present systems and methods, including the best mode of making and using the present systems and methods, directed to one of ordinary skill in the art, is set forth in the specification, which makes reference to the appended figures, in which:
FIG. 1 illustrates a functional block diagram of an exemplary gas turbine, in accordance with embodiments of the present disclosure;
FIG. 2 illustrates a simplified side cross-section view of an exemplary combustor, in accordance with embodiments of the present disclosure;
FIG. 3 illustrates a plurality of combustors and a corresponding plurality of igniters, in accordance with embodiments of the present disclosure;
FIG. 4 illustrates an ignition schedule for a turbomachine during acceleration, in accordance with embodiments of the present disclosure;
FIG. 5 illustrates an ignition schedule for a turbomachine during deceleration, in accordance with embodiments of the present disclosure;
FIG. 6 illustrates a method of operating a turbomachine, in accordance with embodiments of the present disclosure; and
FIG. 7 illustrates a method of operating a turbomachine, in accordance with embodiments of the present disclosure.

### DETAILED DESCRIPTION

Reference now will be made in detail to embodiments of the present systems and methods, one or more examples of which are illustrated in the drawings. Each example is provided by way of explanation, rather than limitation, of the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents.

The detailed description uses numerical and letter designations to refer to features in the drawings. Like or similar designations in the drawings and description have been used to refer to like or similar parts of the invention. As used herein, the terms "first," "second," and "third" may be used interchangeably to distinguish one component from another and are not intended to signify location or importance of the individual components.

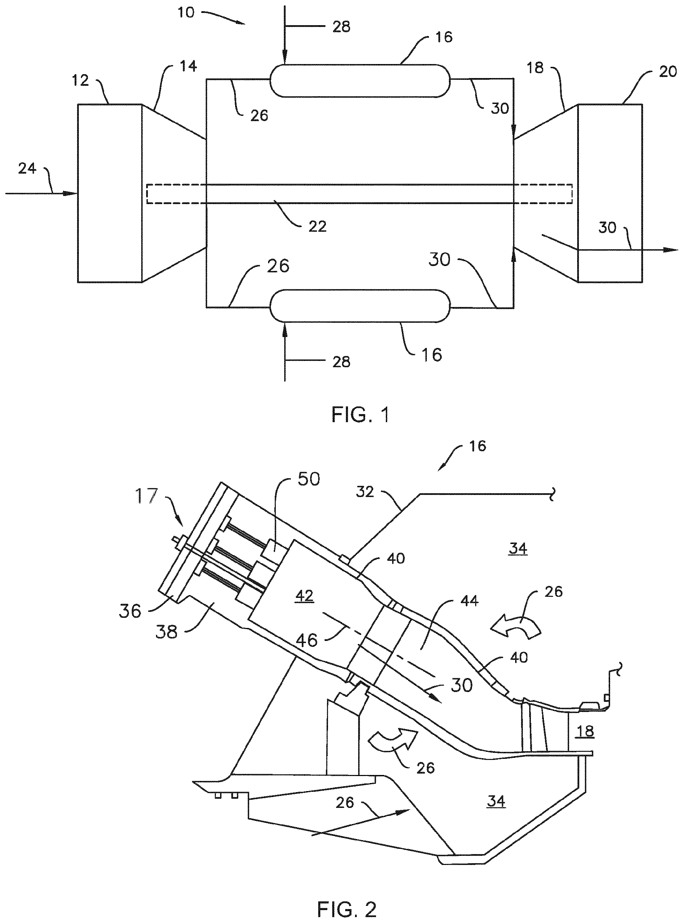

Referring now to the drawings, FIG. 1 illustrates a schematic diagram of one embodiment of a turbomachine, which in the illustrated embodiment is a gas turbine 10. Although an industrial or land-based gas turbine is shown and described herein, the present disclosure is not limited to a land-based and/or industrial gas turbine unless otherwise specified in the claims. For example, the ignition technology and methods, as described herein, may be used in any type of turbomachine, including, but not limited to, a steam turbine, an aircraft gas turbine or a marine gas turbine.

The gas turbine 10 generally includes an inlet section 12, a compressor 14 disposed downstream of the inlet section 12, a plurality of combustors 16 disposed downstream of the compressor 14, a turbine 18 disposed downstream of the combustors 16 and an exhaust section 20 disposed downstream of the turbine 18. Additionally, the gas turbine 10 may include one or more shafts 22 that couple the compressor 14 to the turbine 18.

During operation, air 24 flows through the inlet section 12 and into the compressor 14 where the air 24 is progressively compressed, thereby providing compressed air 26 to the combustors 16. At least a portion of the compressed air 26 is mixed with a fuel 28 within the combustors 16 and burned to produce combustion gases 30. The combustion gases 30 flow from the combustors 16 into the turbine 18, where energy (kinetic and/or thermal) is transferred from the combustion gases 30 to rotor blades (not shown), causing shaft 22 to rotate. The mechanical rotational energy may then be used for various purposes, such as to power the compressor 14 and/or to generate electricity. The combustion gases 30 exiting the turbine 18 may then be exhausted from the gas turbine 10 via the exhaust section 20.

As shown in FIG. 2, each combustor 16 may be at least partially surrounded by an outer casing 32, such as a compressor discharge casing. The outer casing 32 may at least partially define a high pressure plenum 34 that at least partially surrounds various components of the combustor 16. The high pressure plenum 34 may be in fluid communication with the compressor 14 (FIG. 1) so as to receive the compressed air 26 from the compressor 14. An end cover 36 may be coupled to the outer casing 32. In particular embodiments, the outer casing 32 and the end cover 36 may at least partially define a head end volume or portion 38 of the combustor 16.

In particular embodiments, the head end portion 38 is in fluid communication with the high pressure plenum 34 and/or the compressor 14. One or more liners or ducts 40 may at least partially define a combustion chamber or zone 42 for combusting the fuel-air mixture and/or may at least partially define a hot gas path 44 through the combustor, for directing the combustion gases 30 towards an inlet to the turbine 18. One or more fuel nozzles 50 may be coupled to the end cover 36 and extend towards the combustion chamber 42. An igniter 17 may be in operative communication with the combustor 16, and the igniter 17 may be configured to initiate combustion in the combustor 16. The igniter 17 may extend axially downstream from the end cover 36.

As used herein in the context of the combustor 16, "axially" is with respect to an axial centerline 46 of the combustor 16, e.g., the igniter 17 may extend downstream from the end cover 36 along or parallel to the axial centerline 46. As used herein, terms such as "upstream" or "downstream" are to be understood with reference to the flow direction of fuel and/or air in the combustor 16.

In other embodiments, the igniter 17 may extend at any suitable angle such that the igniter 17 is in communication with the combustion chamber 42. For example, in some embodiments, the igniter 17 may be oriented perpendicularly to the axial centerline 46. In various embodiments, the igniter 17 may be a gas-burning torch, a spark plug, or any other suitable igniter. While reference is made herein to a single igniter 17 per combustor 16, it should be understood that more than one igniter (e.g., a redundant second igniter 17) may be present in one or more combustors 16.

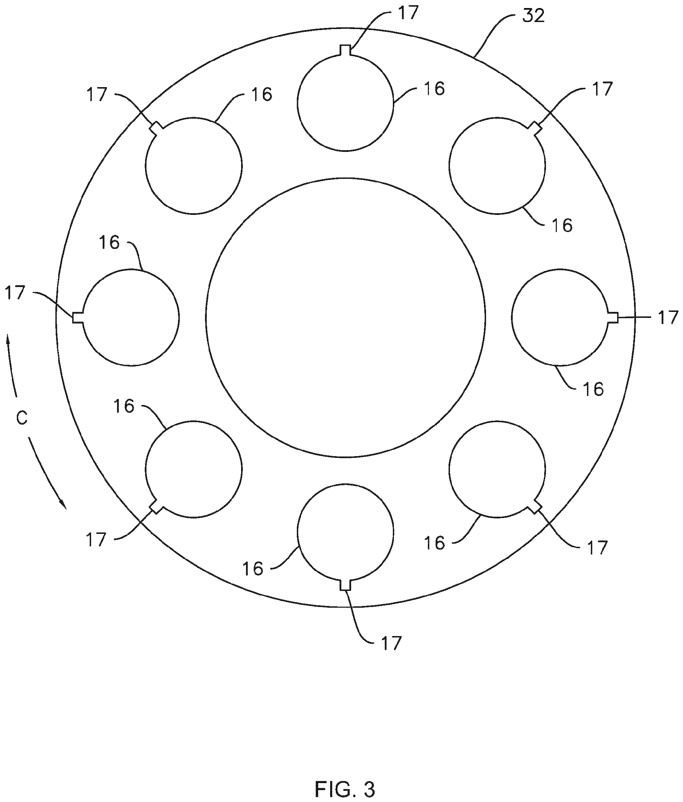

As shown in FIG. 3, the turbomachine (such as the gas turbine 10 described above) may include a plurality of combustors 16 and a corresponding plurality of igniters 17. The plurality of combustors 16 may be arranged in a circumferential array within the casing 32. For example, as illustrated in FIG. 3, the plurality of combustors 16 may be aligned along a circumferential direction C, where the circumferential direction C extends around a central axis of the turbomachine, e.g., the shaft 22 of the gas turbine 10. As may be seen in FIG. 3, each igniter 17 in the plurality of igniters 17 is mounted on and in operative communication with a corresponding one of the plurality of combustors 16, and each combustor 16 of the plurality of combustors 16 has a corresponding igniter 17 mounted thereon.

In some embodiments, as illustrated in FIG. 3, there are no cross-fire tubes between any of the combustors 16. For example, in such embodiments, the gas turbine 10 may not include a cross-fire tube connected to any of the combustors 16 of the plurality of combustors 16. Where each combustor 16 has a corresponding igniter 17, cross-fire tubes are not needed in order to propagate ignition from one combustor 16 to another. Instead, each combustor 16 may be directly ignited by activating the corresponding igniter 17 mounted to and in operative communication with the combustor 16. In at least some embodiments, each combustor 16 may be directly and independently ignited. For example, each igniter 17 of the plurality of igniters 17 may be controlled independently of every other igniter 17 of the plurality of igniters 17. Thus, for example, if a single combustor 16 flames out, that single combustor 16 can be reignited by activating only the corresponding igniter 17 separate of the other igniters 17 and without disturbing or interrupting the operation of any of the other combustors 16.

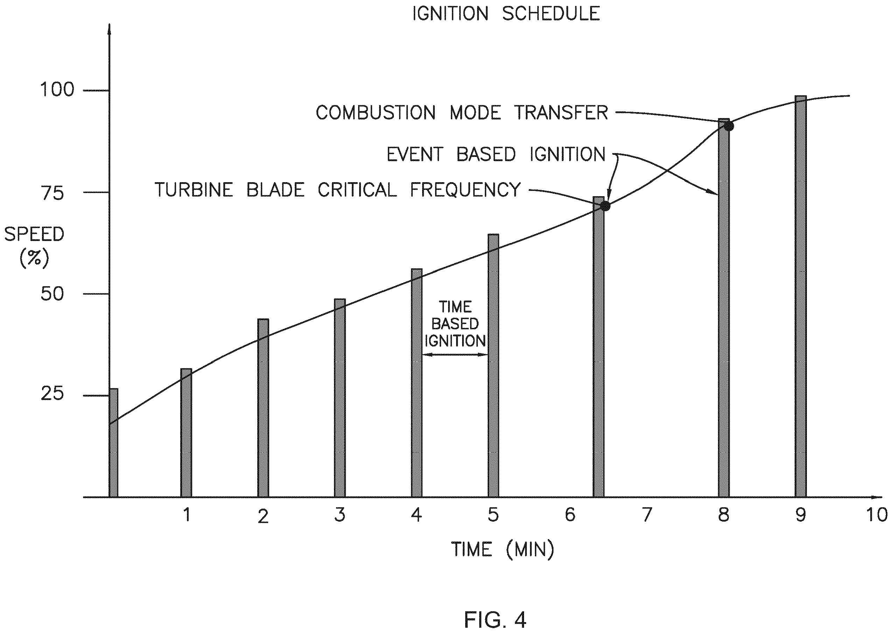

FIG. 4 illustrates an example ignition schedule during ramp-up or acceleration of the turbomachine, such as during startup of the turbomachine, according to one or more embodiments of the present subject matter. As shown, the rotational speed of the gas turbine 10 changes (e.g., increases) over time during the ramp-up period. As such, the ramp-up period represents a period of time during which the shaft 22 is rotated at an increasing speed, such that the shaft 22 is rotated at one or more first rotational speeds followed by a subsequent speed, which may be referred to as a second speed greater than the first speed, and the rotational speed of the shaft 22 changes from the first speed to the second speed over a period of time.

As illustrated in FIG. 4, the first speed is the lowest speed and the speed increases over time, e.g., the second speed is greater than the first speed. In embodiments further including a third speed and a fourth speed, the third speed is greater than the second speed, and each subsequent speed is greater than the preceding speed. In some embodiments, the rotational speed of the shaft 22 may continue to increase until the speed reaches full speed, or about 100%, as described below. As may be seen in FIG. 4, the acceleration is not necessarily linear, rather, the increase in speed from the first speed to the second speed may be unequal to, e.g., less than, the increase in speed from the second speed to the third speed (for example in embodiments including a third speed).

For example, during ramp-up or acceleration the first speed may be about 14% speed at a time t = 0 minutes, and the second speed may be about 20% or about 25% at a time t = 1 minute such that the period of time is about one minute, or the second speed may be about 33% at a time t = 2 minutes, etc., up to and including the second speed may be about 100% (e.g., "about" in this particular instance meaning that the rotational speed asymptotically approaches full speed or 100% as illustrated in FIG. 4), where the period of time may be about ten minutes or more. In various embodiments, "full speed" or "100%" referred to herein means maximum rotational speed of the rotor, including at no load and/or some level of load, up to and including at full load. Also by way of example, the first speed may be 14%, as mentioned, or may be less than 14%, or may be more than 14%. For instance, as just one possible example, the first speed could be about 33% at a time t = 2 minutes, and the second speed could be any subsequent speed. Unless otherwise specified, terms of approximation, e.g., "generally" or "about," are used herein to include plus or minus ten percent of the stated value.

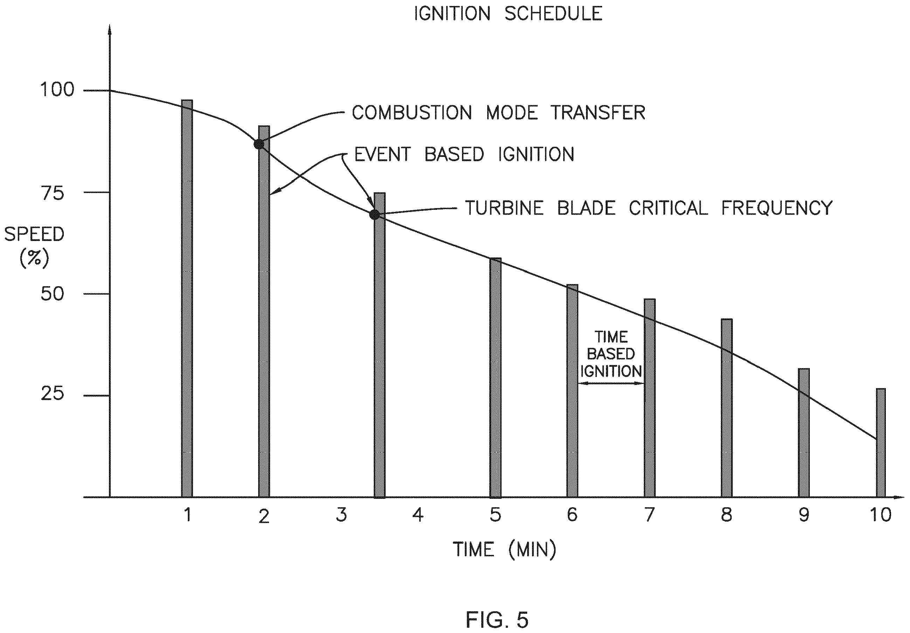

FIG. 5 illustrates an example ignition schedule during shutdown or deceleration of the turbomachine, according to one or more embodiments of the present subject matter. As shown, the rotational speed of the gas turbine 10 changes (e.g., decreases) over time during the shutdown period. As such, the shutdown period represents a period of time during which the shaft 22 is rotated at a decreasing speed, such that the shaft 22 is rotated at one or more first rotational speeds followed by a subsequent speed, which may be referred to as a second speed less than the first speed, and the rotational speed of the shaft 22 changes from the first speed to the second speed over a period of time. The change in the rotational speed of the shaft 22 over time during the shutdown or deceleration of the turbomachine illustrated in FIG. 5 is generally inverse of the of the ramp-up or acceleration illustrated in FIG. 4, e.g., each subsequent speed during shutdown or deceleration is less than each preceding speed, the decrease in speed is not necessarily linear, and the rotational speed of the shaft 22 may continue to decrease until a certain minimum speed is reached, etc., in a similar (but inverse) manner as described with respect to the ramp-up or acceleration illustrated in FIG. 4.

For example, during shutdown or deceleration the first speed may be about 100% speed at a time t = 0 minutes, and the second speed may be about 14% at a time t = 10 minutes such that the period of time is about ten minutes, or the second speed may be about 33% at a time t = 8 minutes, etc., where the possible periods of time during the shutdown are generally similar to the example periods of time described above in the context of the startup time, with the main difference being that each second speed is less than the corresponding first speed during a deceleration period, such as a shutdown period.

Some embodiments of the present subject matter include time-based ignition, e.g., where one or more, such as all, of the igniters 17 of the plurality of igniters 17 are activated, e.g., fired, where "fired" may include emitting a flame, a laser beam, or a spark, among other possible ignition sources, repeatedly throughout the ramp-up time at a regular interval. For example, the regular interval may be about one minute, and the igniters 17 may therefore be activated every minute over the period of ramp-up time. For example, the ramp-up time may be several minutes, such as between about five minutes and about fifteen minutes, or such as about ten minutes. In other embodiments, the regular interval of the time-based ignition may be greater than one minute (e.g., about ninety seconds or more) or may be less than one minute (e.g., such as about thirty seconds or less).

Some embodiments of the present subject matter may also or instead include event-based ignition, e.g., firing at least one igniter 17 of the plurality of igniters 17 at least at one predetermined speed threshold during the period of time. The at least one predetermined speed threshold may be or include a speed threshold that corresponds to a critical operating frequency of the turbomachine. For example, as noted in FIGS. 4 and 5, the predetermined speed threshold may correspond to a turbine blade critical frequency or resonant frequency. Thus, firing one or more, e.g., all, of the igniters 17 at the predetermined speed threshold may reduce or prevent oscillations within the turbomachine. The at least one predetermined speed threshold may also or instead be or include a speed threshold that corresponds to an operating mode transfer of the turbomachine, such as a combustion mode transfer, as noted in FIGS. 4 and 5.

In some embodiments, firing at least one igniter 17 of the plurality of igniters 17 may include simultaneously firing all of the igniters of the plurality of igniters 17, such as at each occurrence of the regular interval during the period of time and/or at each predetermined speed threshold during the period of time. In other embodiments, firing at least one igniter 17 of the plurality of igniters 17 may instead include firing less than all of the igniters 17, such as firing a first subset of the plurality of igniters 17 at a first occurrence of the regular interval and/or a first predetermined speed threshold and firing a second subset of the plurality of igniters 17, which differs at least in part from the first subset of the plurality of igniters 17, at a subsequent occurrence of the regular interval and/or a subsequent predetermined speed threshold.

In further example embodiments, the gas turbine 10 may include one or more sensors or event detectors. In such embodiments, the gas turbine 10, and/or a controller thereof, may be operable or configured to detect an event or condition, such as a flame out, in one or more combustors 16 of the plurality of combustors 16 and to fire the igniter 17 of the plurality of igniters 17 that corresponds to the combustor(s) 16 in which the condition was detected in response to the detected condition. For example, the igniters 17 of the plurality of igniters 17 may be independently controlled, such that only the corresponding igniter(s) 17 of the plurality of igniters 17 is or are fired in response to the detected condition.

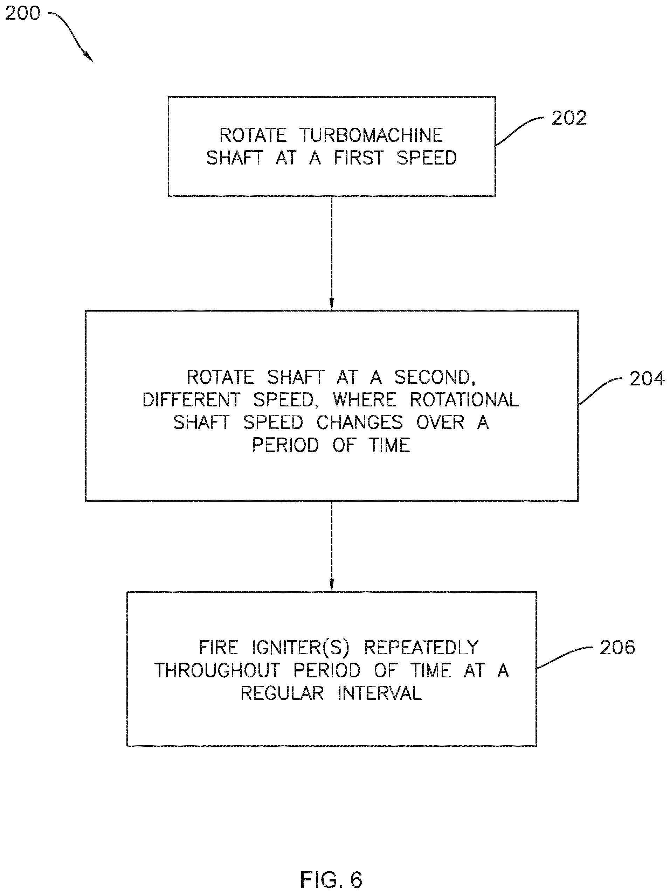

FIG. 6 provides a flow chart that illustrates an example method 200 of operating a turbomachine, such as the gas turbine 10 described herein, in accordance with one or more example embodiments of the present disclosure. As illustrated in FIG. 6, the method 200 may include a step 202 of rotating a shaft of the turbomachine at a first speed, followed by a step 204 of rotating the shaft of the turbomachine at a second speed different from the first speed after rotating the shaft of the turbomachine at the first speed. The rotational speed of the shaft may change, e.g., increase or decrease, from the first speed to the second speed over a period of time. The method 200 may further include a step 206 of firing at least one igniter of the plurality of igniters repeatedly throughout the period of time at a regular interval.

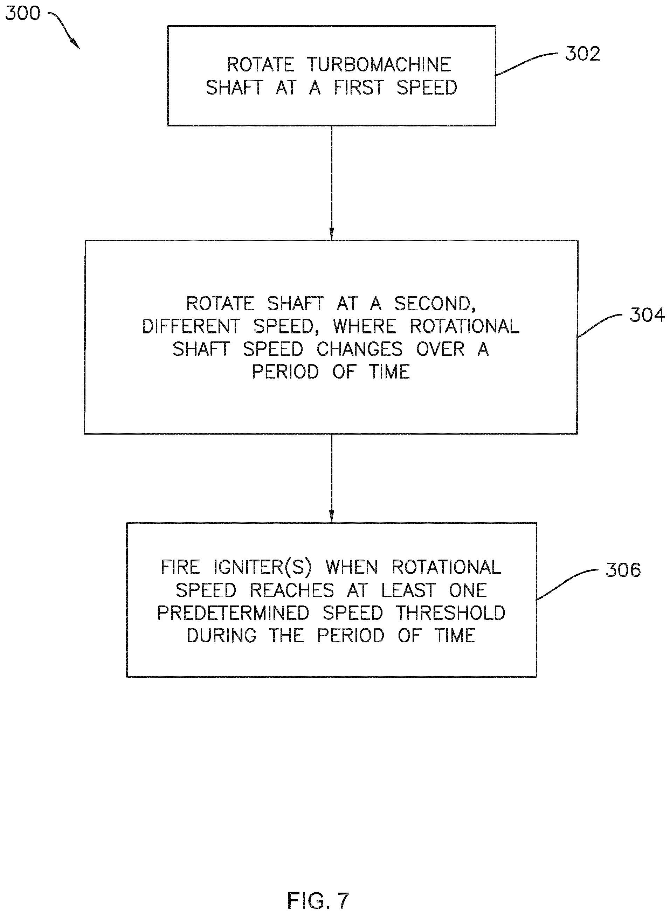

FIG. 7 provides a flow chart that illustrates a method 300 of operating a turbomachine, such as the gas turbine 10 described herein, in accordance with one or more additional example embodiments of the present disclosure. As illustrated in FIG. 7, the method 300 may include a step 302 of rotating a shaft of the turbomachine at a first speed, followed by a step 304 of rotating the shaft of the turbomachine at a second speed different from the first speed after rotating the shaft of the turbomachine at the first speed. The rotational speed of the shaft may change, e.g., increase or decrease, from the first speed to the second speed over a period of time. The method 300 may further include a step 306 of firing at least one igniter of the plurality of igniters when the rotational speed reaches at least one predetermined speed threshold during the period of time.

Features illustrated or described as part of one embodiment may be used on another embodiment to yield a still further embodiment. For example, in some embodiments, a startup or shutdown ignition schedule, e.g., as illustrated in FIG. 4 or FIG. 5, may include only time-based ignition or only event-based ignition or may include a first period of time using time-based ignition and a second period of time using event-based ignition. The first and second periods of time may occur in any order and may be performed simultaneously, consecutively, or may overlap. Thus, it is intended that the present disclosure covers such modifications and variations as come within the scope of the appended claims and their equivalents.

This written description uses examples to disclose the invention, including the best mode, and also to enable any person skilled in the art to practice the invention, including making and using any devices or systems and performing any incorporated methods. The patentable scope of the invention is defined by the claims and may include other examples that occur to those skilled in the art. Such other examples are intended to be within the scope of the claims if they include structural elements that do not differ from the literal language of the claims or if they include equivalent structural elements with insubstantial differences from the literal language of the claims.

## Claims

1. A method of operating a turbomachine (10), the turbomachine (10) comprising a compressor (14), a turbine (18), a plurality of combustors (16) downstream from the compressor (14) and upstream from the turbine (18), and a plurality of igniters (17), each igniter (17) in the plurality of igniters (17) mounted on and in operative communication with a corresponding one of the plurality of combustors (16), wherein each combustor (16) of the plurality of combustors (16) has a corresponding igniter (17) mounted thereon, the method comprising:
rotating a shaft (22) of the turbomachine (10) at a first speed;
rotating the shaft (22) of the turbomachine (10) at a second speed different from the first speed after rotating the shaft (22) of the turbomachine (10) at the first speed, wherein rotational speed of the shaft (22) changes from the first speed to the second speed over a period of time; and
firing at least one igniter (17) of the plurality of igniters (17) repeatedly throughout the period of time at a regular interval.

2. The method of claim 1, wherein firing at least one igniter (17) of the plurality of igniters (17) comprises simultaneously firing all of the igniters (17) of the plurality of igniters (17) at each occurrence of the regular interval during the period of time.

3. The method of claim 1, further comprising detecting a condition in one of the combustors (16) of the plurality of combustors (16) and firing only the corresponding igniter (17) of the plurality of igniters (17) in response to the detected condition.

4. The method of claim 1, wherein the first speed is less than the second speed.

5. The method of claim 1, wherein the first speed is greater than the second speed.

6. The method of claim 1, wherein the second speed is a full speed of the turbomachine (10).

7. The method of claim 1, wherein the first speed is a full speed of the turbomachine (10).

8. A method of operating a turbomachine (10), the turbomachine (10) comprising a plurality of combustors (16) and a plurality of igniters (17), each igniter (17) in the plurality of igniters (17) mounted on and in operative communication with a corresponding one of the plurality of combustors (16), wherein each combustor (16) of the plurality of combustors (16) has a corresponding igniter (17) mounted thereon, the method comprising:
rotating a shaft (22) of the turbomachine (10) at a first speed;
rotating the shaft (22) of the turbomachine (10) at a second speed different from the first speed after rotating the shaft (22) of the turbomachine (10) at the first speed, wherein rotational speed of the shaft (22) changes from the first speed to the second speed over a period of time; and
firing at least one igniter (17) of the plurality of igniters (17) when the rotational speed reaches at least one predetermined speed threshold during the period of time.

9. The method of claim 8, wherein firing at least one igniter (17) of the plurality of igniters (17) comprises simultaneously firing all of the igniters (17) of the plurality of igniters (17) at the at least one predetermined speed threshold during the period of time.

10. The method of claim 8, wherein the at least one predetermined speed threshold corresponds to a critical operating frequency of the turbomachine (10).

11. The method of claim 8, wherein the at least one predetermined speed threshold corresponds to an operating mode transfer of the turbomachine (10).

12. The method of claim 8, further comprising detecting a condition in one of the combustors (16) of the plurality of combustors (16) and firing only the corresponding igniter (17) of the plurality of igniters (17) in response to the detected condition.

13. The method of claim 8, wherein the first speed is less than the second speed.

14. The method of claim 8, wherein the first speed is greater than the second speed.
